Europäisches Patentamt

European Patent Office

Office européen des brevets

(11) Numéro de publication: **0 434 536 B1**

## (12) FASCICULE DE BREVET EUROPEEN

(45) Date de publication de fascicule du brevet: **05.04.95**

(51) Int. Cl.6: **D04H 1/00**, D04H 1/42

(21) Numéro de dépôt: **90403629.0**

(22) Date de dépôt: **18.12.90**

(54) Matelas thermo-isolant en fibres minérales à orientation aléatoire.

(30) Priorité: **19.12.89 CH 4567/89**
**29.05.90 CH 1809/90**

(43) Date de publication de la demande:
**26.06.91 Bulletin 91/26**

(45) Mention de la délivrance du brevet:
**05.04.95 Bulletin 95/14**

(84) Etats contractants désignés:
**AT BE CH DE DK ES FR GB IT LI NL SE**

(56) Documents cités:
**EP-A- 0 038 989**
**EP-A- 0 131 524**
**US-A- 4 451 276**

(73) Titulaire: **ISOVER SAINT-GOBAIN**
**18, avenue d'Alsace**
**F-92400 Courbevoie (FR)**

(72) Inventeur: **Baracchini, Paolo**
**6, chemin des Roches**
**CH-1009 Pully (CH)**
Inventeur: **Vullieme, Jean-Pierre**
**2, chemin de la Ferme**
**CH-1522 Lucens (CH)**

(74) Mandataire: **Le Vaguerèse, Sylvain Jacques**
**et al**
**SAINT-GOBAIN RECHERCHE**
**39, quai Lucien Lefranc**
**F-93300 Aubervilliers Cédex (FR)**

Rank Xerox (UK) Business Services
(3.10/3.09/3.3.3)

## Description

On connaît déjà des procédés de fabrication de matelas ou feutres thermo-isolants en fibres minérales (fibres de verre ou fibres de roche) dont l'orientation est pratiquement aléatoire, tels que décrits dans le brevet européen 0 133 083. Ces produits ont des qualités intéressantes, mais ils ont une masse volumique élevée (de 50 à 150 kg/m³) et ne possèdent pas une flexibilité suffisante pour certaines applications, notamment lorsqu'il s'agit d'appliquer de tels matelas isolants sur des surfaces cylindriques, de réservoirs par exemple, sans formation de poches de condensation du côté en contact avec la surface cylindrique et sans formation de fissures dans la surface extérieure.

La présente invention vise à fournir un produit ayant les qualités requises pour de telles applications.

Les auteurs de la présente invention ont trouvé la solution en constatant, de façon inattendue voire surprenante au cours de leurs recherches, qu'en diminuant de façon très sensible le diamètre des fibres, par rapport à l'état de la technique, on pouvait réaliser un produit ayant les qualités souhaitées et, de plus, une masse volumique nettement inférieure à celle des produits similaires connus.

La présente invention a pour objet un matelas thermo-isolant en fibres minérales obtenu à partir de fibres transportées par un courant gazeux jusqu'à un tapis convoyeur perméable aux gaz et retenant les fibres préalablement enduites d'un liant, les fibres se déposant essentiellement dans des plans parallèles au convoyeur, le feutre formé sur le convoyeur étant soumis à au moins une compression dans le sens de la longueur pour obtenir une orientation quasi-aléatoire, cette orientation étant rendue permanente par fixation du liant, qui est caractérisé en ce qu'il est formé de fibres ayant, pour la grande majorité d'entre elles, un diamètre compris entre 2,5 et 4,5 micromètres et une longueur de 2 à 15 cm, et en ce qu'il possède une masse volumique non supérieure à 40 kg/m³.

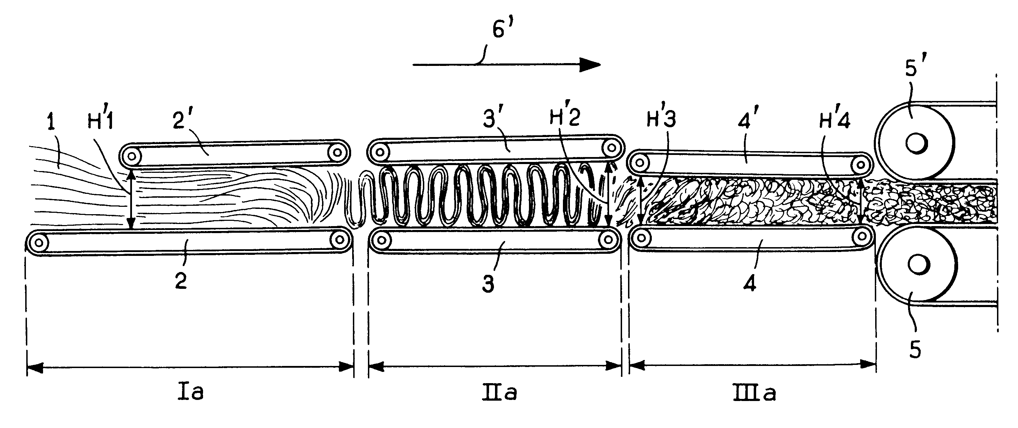

On va décrire maintenant, à titre d'exemple, une forme d'exécution du matelas selon l'invention. Le dessin annexé représente, également à titre d'exemple, comment le matelas selon l'invention peut être fabriqué.

Le dessin représente, schématiquement, une installation pour la fabrication d'un matelas thermo-isolant en fibres minérales ayant une orientation quasi-aléatoire selon l'invention.

Les matelas connus de fibres minérales ayant une orientation quasi-aléatoire sont formés de fibres de verre ou de roche ayant un diamètre de 6 à 14 micromètres et une longueur de quelques centimètres. Selon l'invention, le matelas est formé de fibres minérales nettement plus fines ayant, pour la grande majorité d'entre elles, un diamètre moyen de 2,5 à 4,5 micromètres et une longueur de 2 à 15 cm.

On va décrire maintenant comment on peut réaliser, avec un tel matériau, un matelas isolant ayant les qualités désirées indiquées plus haut.

De façon traditionnelle, les feutres de fibres minérales sont constitués en continu en déposant sur un convoyeur les fibres qui sont véhiculées par des courants gazeux. Le convoyeur retient les fibres et laisse passer les gaz.

Avant qu'elles ne de déposent sur le convoyeur, les fibres sont enduites d'une composition résineuse destinée à lier les fibres entre elles donnant, ainsi, sa cohésion au feutre constitué. La composition résineuse, appliquée sous forme liquide, est réticulée par un traitement thermique effectué sur le feutre préalablement ramené aux conditions d'épaisseur et de masse volumique souhaitées.

La formation des feutres par dépôt des fibres sur le convoyeur de réception, ou sur un organe analogue, conduit à un enchevêtrement qui n'est pas homogène dans toutes les directions. On constate, expérimentalement, que les fibres ont une forte tendance à se placer parallèlement à la surface de réception. Cette tendance est d'autant plus accentuée que les fibres sont plus longues.

Dans l'installation représentée sur le dessin, les fibres arrivent sous forme d'un matelas 1 qui est ensuite soumis, comme il va être expliqué, à un double crêpage qui est réalisé à deux niveaux. Ce matelas passe d'abord dans une section amont formée de deux zones Ia et IIa qui ont des sections différentes. Une zone IIIa forme une section aval qui a pour fonction de conduire le matelas avec encollage non polymérisé vers une étuve de polymérisation non représentée.

Le matelas ou feutre de fibres de verre (ou autres fibres minérales) arrive en 1 avec encollage non polymérisé, venant de la réception (non représentée) et passe, avec la vitesse de réception en 1, entre une paire de convoyeurs 2, 2′ et s'engage ensuite entre une paire de convoyeurs parallèles aval.

En sortant d'entre les convoyeurs 2, 2′ de la zone Ia, le feutre arrive sur la paire de convoyeurs 3, 3′ de la zone IIa, ayant une vitesse beaucoup plus faible, ce qui produit une compression longitudinale du produit et un premier crêpage, comme illustré sur le dessin.

En sortant d'entre les convoyeurs 3, 3′ le feutre, crêpé une première fois, arrive sur la paire de convoyeurs 4, 4′ de la zone IIIa, ayant une vitesse inférieure à celle des convoyeurs 3, 3′, avec pour conséquence, une seconde compression du produit entre ces convoyeurs et un second crêpage donnant au produit final une disposition des fibres complètement aléatoire, comme représentée sur le dessin.

Ensuite, le produit arrive à une paire de convoyeurs 5, 5′ qui fait passer le feutre dans une étuve (non représentée) de polymérisation du liant.

La direction de cheminement du feutre est indiquée par la flèche 6′.

Grâce au double crêpage et à l'emploi de fibres fines, on obtient un produit ayant une moindre masse volumique apparente (MVA) et une plus grande flexibilité le rendant apte, par exemple, à l'isolation thermique de grandes citernes à l'air libre, par enroulement sur la périphérie de ces citernes.

On va donner maintenant des exemples concrets de différentes valeurs (vitesses des différents convoyeurs et des hauteurs d'entrée et de sortie de certains convoyeurs).

La première compression longitudinale produite par le passage du feutre des convoyeurs 2, 2′ de la zone Ia aux convoyeurs 3, 3′ de la zone IIa est réalisée en donnant à ces derniers une vitesse qui est, par exemple, 2,5 fois plus petite que celle des convoyeurs de la zone Ia. C'est ce qui donne la structure ondulée visible sur le dessin.

La seconde compression longitudinale est obtenue en donnant aux convoyeurs 4, 4′ de la zone IIIa une vitesse qui est, par exemple, 2,5 fois plus petite que celles des convoyeurs de la zone IIa. C'est ce qui donne une structure aléatoire et homogène.

La vitesse $v_1$ des convoyeurs 2, 2′ de la zone Ia est égale à la vitesse d'entrée du feutre en 1. Celle-ci est ajustée pour obtenir le rapport de vitesses (ou de crêpage) désiré.

La vitesse des convoyeurs 4, 4′ de la zone aval IIIa est égale à la vitesse des convoyeurs 5, 5′ amenant le feutre à l'étuve, ce qui évite tout bourrage ou décrêpage accidentel lors du passage du matelas de la zone IIIa à l'étuve.

La vitesse des convoyeurs de la zone Ia est égale à la vitesse d'entrée (vitesse de réception) $v_r$ du feutre en 1.

La vitesse des convoyeurs dans la zone IIa est, pour le double crêpage, calculée en fonction du rapport de la vitesse d'entrée $v_r$ du feutre à la vitesse dans l'étude $v_e$, donc $v_r/v_e$ (vitesse de crêpage), soit :

$$V_{zone\ IIa} = \frac{v_r}{\sqrt{v_r/v_e}}$$

Le réglage des épaisseurs du feutre a lieu de la façon suivante :

- Section amont, zones Ia et IIa :
  - soit H′1 la hauteur d'entrée dans le convoyeur de la zone Ia,
  - soit H′2 la hauteur de sortie des convoyeurs de la Zone IIa,

  on a alors :
  - H′1 = (1,2 à 2,3) . Ee (selon la MVA désirée),
  - H′2 = (1,3 à 2,4) . Ee (selon la MVA désirée) ;
- Section aval, zone IIIa :
  - soit H′3 la hauteur d'entrée entre les convoyeurs 4 et 4′,
  - soit H′4 la hauteur de sortie entre les convoyeurs 4 et 4′,

  on a alors :
  - H′3 = (1,0 à 1,30) . Ee (selon la MVA désirée),
  - H′4 = (1,0 à 1,20) . Ee (selon la MVA désirée.

Les convoyeurs 3, 3′ et 4, 4′ s'opposent à une augmentation d'épaisseur du matelas sous l'effet de la pression axiale qu'il subit.

Les deux sections, amont (Ia et IIa) et aval (IIIa), sont liées mécaniquement l'une à l'autre et sont disposées sur un chemin de roulement permettant le positionnement de leur ensemble par rapport à l'étuve.

Chaque convoyeur est équipé d'un tapis entraîné par un ensemble moto-réducteur à courant continu permettant un ajustement précis des vitesses aux valeurs désirées.

Grâce à la finesse des fibres et à la disposition complètement aléatoire des fibres d'isolation dans le produit fini, ce dernier possède une surface compacte, une bonne souplesse et une épaisseur constante avec de bonnes qualités d'isolation.

L'application du produit sur de grandes surfaces planes ou non planes (concaves ou convexes) est facile. Le produit offre une résistance à la compression qui est suffisante pour permettre d'appliquer sur lui un revêtement de protection ou une couche d'isolation supplémentaire. Le produit peut se présenter sous la forme d'un feutre en rouleau, se prêtant bien à l'application sur la face extérieure d'un revêtement ignifuge et sur des surfaces cylindriques.

Le produit ainsi obtenu présente les caractéristiques suivantes :
- distribution aléatoire ou quasi-aléatoire des fibres (de verre ou de roche),
- grande finesse des fibres (diamètres de 2,5 à 4,5 micromètres),
- longueur des fibres de 2 à 15 cm,
- masse volumique apparente (MVA) $\leq$ 40 kg/m$^3$,
- résistance à la compression (pour un écrasement de 10 %) $\geq$ 0,5 kN/m$^2$,

- coefficient de conductibilité thermique ≦ 0,040 W/mK.

Le matelas final peut avoir une épaisseur de 20 à 200 mm.

Le matelas peut présenter un surfaçage, c'est-à-dire être revêtu d'une ou deux feuilles adhérentes de papier, d'aluminium, de polyéthylène ou de PVC.

La distribution aléatoire des fibres fines utilisées assure, lors de l'enroulement du matelas autour d'une surface cylindrique, que cet enroulement se fasse sans déformation des surfaces intérieure et extérieure qui sont, ainsi, parfaitement cylindriques avec bonne application sur le corps à isoler, évitant toutes poches de condensation du côté intérieur et toutes fissures du côté extérieur.

## Revendications

1. Matelas thermo-isolant en fibres minérales obtenu à partir de fibres transportées par un courant gazeux jusqu'à un tapis convoyeur perméable aux gaz et retenant les fibres préalablement enduites d'un liant, les fibres se déposant essentiellement dans des plans parallèles au convoyeur, le feutre formé sur le convoyeur étant soumis à au moins une compression dans le sens de la longueur pour obtenir une orientation quasi-aléatoire, cette orientation étant rendue permanente par fixation du liant, **caractérisé en ce qu'**il est formé de fibres ayant, pour la grande majorité d'entre elles, un diamètre compris entre 2,5 et 4,5 micromètres et une longueur de 2 à 15 centimètres, **et en ce qu'**il possède une masse volumique non supérieure à 40 kg/m$^3$.

2. Matelas selon la revendication 1, **caractérisé en ce qu'**il possède une résistance à la compression, pour un écrasement de 10 %, au moins égale à 0,5 kN/m$^2$.

3. Matelas selon les revendications 1 ou 2, **caractérisé en ce qu'**il possède un coefficient de conductibilité thermique non supérieur à 0,040 W/mK.

4. Matelas selon l'une des revendications 1 à 3, **caractérisé en ce que**, grâce à ses propriétés mécaniques, il tolère d'être appliqué sur un corps de surface cylindrique de diamètre non inférieur à 300 mm, sans présenter d'irrégularités appréciables de ses faces incurvées, assurant ainsi une bonne application sur ladite surface cylindrique et une surface extérieure lisse, exempte de fissures, et concentrique avec ladite surface cylindrique.

## Claims

1. Heat-insulating mat of mineral fibres having a substantially random orientation, characterized in that it is formed by fibres of which the great majority have a diameter of between 2.5 and 4.5 $\mu$m and a length of between 2 and 15 cm; and in that it has a density of not more than 40 kg/m$^3$.

2. Mat according to Claim 1, characterised in that it has resistance to compression which is at least 0.5 kN/m$^2$ on crushing by 10 %.

3. Mat according to Claim 1 or 2, characterised in that it has a coefficient of heat conductivity of not more than 0.040 W/mK.

4. Mat according to any one of Claims 1 to 3, characterised in that, by virtue of its mechanical properties, it tolerates being applied to a body having a cylindrical surface with a diameter which is not less than 300 mm, without displaying any appreciable irregularities of its curved faces, thus ensuring satisfactory application to the cylindrical surface and a smooth outer surface, which is free of cracks, and is concentric with the cylindrical surface.

## Patentansprüche

1. Wärmedämmende Matte aus Mineralfasern mit einer quasizufälligen Faserausrichtung, *dadurch gekennzeichnet, daß* sie aus Fasern gebildet ist, von denen die überwiegende Mehrheit einen Durchmesser zwischen 2,5 und 4,5 $\mu$m und eine Länge von 2 bis 15 cm aufweisen, *und daß* sie eine Dichte von nicht mehr als 40 kg/m$^3$ aufweist.

2. Matte nach Anspruch 1, *dadurch gekennzeichnet, daß* sie eine Druckfestigkeit von mindestens 0,5 kN/m$^2$ bei einer Druckverformung von 10% aufweist.

3. Matte nach den Ansprüchen 1 und 2, *dadurch gekennzeichnet, daß* sie einen Wärmeleitkoeffizienten von nicht mehr als 0,040 W/mK aufweist.

4. Matte nach einem der Ansprüche 1 bis 3, dadurch gekennzeichnet, daß sie aufgrund ihrer mechanischen Eigenschaften die Aufbringung auf einem Körper mit zylindrischer Oberfläche mit einem Durchmesser von nicht weniger als 300 mm gestattet, ohne nennenswerte Unregelmäßigkeiten ihrer gekrümmten Oberflächen aufzuweisen, wodurch eine gute Aufbringung auf der zylindrischen Oberfläche und eine glatte Außenfläche, die keine Spaltstellen aufweist und mit der zylindrischen Oberfläche konzentrisch ist, gewährleistet sind.